# EUROPÄISCHE PATENTSCHRIFT

(11) **EP 3 949 090 B1**
(45) Veröffentlichungstag und Bekanntmachung des Hinweises auf die Patenterteilung: **07.05.2025**
(21) Anmeldenummer: 20714585.5
(22) Anmeldetag: 26.03.2020
(51) Int. Cl.: H02K 7/14

(54) **LÜFTERSYSTEM MIT EINEM ELEKTROMOTOR**
FAN SYSTEM WITH AN ELECTROMOTOR
SYSTÈME DE VENTILATEUR AVEC UN MOTEUR ÉLECTRIQUE

(30) Priorität: 29.03.2019 DE 102019204458
(43) Veröffentlichungstag der Anmeldung: 09.02.2022
(73) Patentinhaber: Robert Bosch GmbH, 70442 Stuttgart (DE)
(72) Erfinder: ALLGEIER, Christian, 76571 Gaggenau (DE); LUDWIG, Victor, 77784 Oberhamersbach (DE); NICGORSKI, Dana, Burlington, MA, Massachusetts 01803 (US); MEYER, Friedrich, 76135 Karlsruhe (DE); STEVENS, William S., Maynard, Massachusetts MA-01754 (US); STRUPP, Michael, 76448 Durmersheim (DE)
(86) Internationale Anmeldenummer: PCT/EP2020/058466
(87) Internationale Veröffentlichungsnummer: WO 2020/200987

(56) Entgegenhaltungen:
- EP-A1- 1 843 447
- WO-A2-2013/032923
- KR-A- 20190 017 239
- US-A- 4 203 704

## Beschreibung

Die Erfindung geht aus von einem Lüftersystem mit einem Elektromotor.

Es ist schon bekannt, das Lüfterrad eines Lüftersystems an den drehenden Rotor direkt anzuschrauben. Hierbei werden jedoch Kräfte aus dem Magnetkreis des Elektromotors unmittelbar in das Lüfterrad eingekoppelt, welche zu ungewünschten Anregungen von Vibrationen und damit einhergehend zu einer ungewünschten Geräuschentwicklung führen. Lüftersysteme nach dem Stand der Technik sind unter anderem aus der US 4,203,704 und der WO 2013/032923 A2 bekannt.

Die Erfindung geht aus von einem Lüftersystem mit einem Elektromotor, wobei der Elektromotor einen Rotor aufweist und der Rotor gegenüber einem Stator drehbar gelagert ist, wobei an einer Stirnfläche des Rotors ein Lüfterrad über zumindest ein Anbindungselement in einem Anbindungsabschnitt des Rotors drehfest angeordnet ist. Es wird vorgeschlagen, dass zumindest ein Entkopplungselement vorgesehen ist, welches den zumindest einen Anbindungsabschnitt in seinem jeweiligen radial äußeren Bereich umgreift, wobei das Entkopplungselement dazu vorgesehen ist, den Anbindungsabschnitt des Rotors von einem den Anbindungsabschnitt umgebenden Rotorabschnitt mechanisch zu entkoppeln.

Das erfindungsgemäße Lüftersystem sowie der erfindungsgemäße Rotor mit den Merkmalen der unabhängigen Ansprüche hat den Vorteil, dass mittels des Entkopplungselementes die Kräfte des Magnetkreises des Elektromotors nicht unmittelbar an das Lüfterrad übertragen werden, sondern über eine
Verlängerung der Leitstützstruktur des Kraftflusses eine entsprechende mechanische Entkopplung zwischen den Magneten des Rotors und dem angebundenen Lüfterrad bereitgestellt werden kann. Auf diese Weise kann die Geräuschentwicklung des Lüftersystems vorteilhaft reduziert werden. Gleichzeitig kann der erfindungsgemäße Rotor in vorteilhafter Weise besonders einfach und kostengünstig gefertigt werden. So ist es beispielsweise möglich eine solche Entkopplung in bereits bestehende Lüftersysteme zu integrieren, ohne weiterführende konstruktive Maßnahmen vornehmen zu müssen. Ferner kann durch die Integration der Entkopplung in den Elektromotor selbst die Variantenvielfalt der Anbindung des Lüfterrades an den Rotor in vorteilhafter Weise reduziert werden, wodurch zusätzliche Werkzeug oder Teilekosten reduziert werden können.

Im Rahmen der vorliegenden Erfindung kann unter dem Begriff Motorwelle ein gegenständliches Maschinenelement verstanden werden, welches die Lagerung des Rotors trägt. Weiterhin wird im Folgenden unter dem Begriff einer Drehachse eine gedachte Achse verstanden, um welche der Rotor im Sinne einer Rotationsachse rotiert. Im Unterschied zur Motorwelle, welches ein gegenständliches Maschinenelement darstellt, handelt es sich bei der Drehachse um eine rein gedachte Achse.

Ferner kann im Rahmen der vorliegenden Erfindung unter einem Entkopplungselement ein solches Element verstanden werden, welches eine Relativbewegung der an das Entkopplungselement angrenzenden Bauteile zulässt und somit eine direkte Kraftübertragung zumindest reduziert, insbesondere verhindert.

Im Rahmen der vorliegenden Erfindung kann unter einem Anbindungselement ein Mittel verstanden werden, welches eine Übertragung des Drehmomentes des Rotors auf das Lüfterrad ermöglicht. Insbesondere kann unter einem solchen Anbindungselement ein Element verstanden werden, welches eine drehfeste Verbindung bereitstellt. Bei einem solchen Anbindungselement kann es sich beispielsweise um eine Schraubverbindung handeln. Es ist jedoch auch denkbar, dass das Anbindungselement als Teil einer Niet-, Stift oder Bolzenverbindung ausgebildet ist. Auch andere Verbindungstechniken sind hier denkbar, sofern diese geeignet sind eine Übertragung der Kräfte des Rotors auf das Lüfterrad bereitzustellen. Darüber hinaus kann im Rahmen der vorliegenden Erfindung unter einem Anbindungsabschnitt des Rotors ein Bereich verstanden werden, welcher mit dem entsprechenden Anbindungselement wechselwirkt. Bei der Ausbildung des Anbindungselementes als Schraubverbindung kann dies beispielsweise eine Bohrung zur Aufnahme der entsprechenden Schraube sein.

Erfindungsgemäß ist es vorgesehen, dass das Entkopplungselement den zumindest einen Anbindungsabschnitt in seinem jeweiligen radial äußeren Bereich im Wesentlichen durchgehend umgreift. Dabei kann unter dem radial äußeren Bereich in diesem Zusammenhang der Rotorbereich verstanden werden, welcher radial außerhalb des Anbindungsabschnittes angeordnet ist. Mit anderen Worten stellt der radial äußere Bereich in diesem Zusammenhang den Bereich dar, welcher in Radialrichtung außerhalb des Teilkreisradius angeordnet ist, wobei der Kreismittelpunkt auf der Drehachse des Motors liegt und die Kreislinie mittig durch den Anbindungsabschnitt geht. Somit schließt das Entkopplungselement in diesem Bereich den Anbindungsabschnitt im Wesentlichen vollständig ein und entkoppelt den Anbindungsabschnitt des Rotors von dem den Anbindungsabschnitt umgebenden Rotorabschnitt in diesem Bereich mechanisch.

Gemäß einer vorteilhaften Ausführungsform des Elektromotors ist dieser als Außenläufer ausgebildet.

Erfindungsgemäß ist das Entkopplungselement als axial durchgängiger Entkopplungsspalt ausgebildet. Im Rahmen der vorliegenden Erfindung kann hierbei unter einem Entkopplungsspalt insbesondere eine als Durchgangsöffnung ausgebildete, schmale, längliche Öffnung verstanden werden. Ein solcher Entkopplungsspalt lässt sich mit besonderes einfachen Mitteln kostengünstig fertigen.

Durch die in den Unteransprüchen aufgeführten Merkmale sind vorteilhafte Weiterbildungen des Lüftersystems beziehungsweise des Rotors möglich.

Zur optimalen Ausnutzung des Platzangebotes und Maximierung der Länge der Leitstützstruktur und damit des Kraftflussweges sieht eine Weiterbildung der Erfindung vor, dass sich das Entkopplungselement, welches den radial äußeren Bereich des Anbindungsabschnittes umgreift, in Radialrichtung bis zu einem Innenbereich des Rotors erstreckt. Im Rahmen der vorliegenden Erfindung kann hierbei unter dem Innenbereich diejenige Rotorfläche verstanden werden, welche in der Nähe der Motorwelle angeordnet ist. Insbesondere kann hierbei ein zur Drehachse konzentrisch angeordneter, im Wesentlichen kreisförmiger Bereich verstanden werden, dessen Radius betragsmäßig kleiner ist als die Hälfte des Radius der Stirnfläche des Rotors, vorzugsweise kleiner als ein Viertel des Radius der Stirnfläche des Rotors, insbesondere kleiner als ein Achtel des Radius der Stirnfläche des Rotors

Eine vorteilhafte Weiterbildung der Erfindung sieht ferner vor, dass das Entkopplungselement im Wesentlichen u- oder v-förmig ausgebildet ist. Vorzugsweise ist dabei die Öffnung des im Wesentlichen u- oder v-förmig ausgebildeten Entkopplungselementes der Motorwelle zugewandt angeordnet und das Kreissegment beziehungsweise das spitz zulaufende Ende des im Wesentlichen u- oder v-förmig ausgebildeten Entkopplungselementes ist entsprechend radial außen angeordnet und umgreift den entsprechenden Anbindungsabschnitt.

Eine kraftflussoptimierte Anbindung kann gemäß einer vorteilhaften Weiterbildung der Erfindung dadurch bereitgestellt werden, dass die Spaltbreite des Entkopplungselementes mit zunehmendem Abstand vom Anbindungsabschnitt zunimmt.

Gemäß einer vorteilhaften Weiterbildung der Erfindung ist es vorgesehen, dass an der Stirnfläche des Rotors, welche als Rotorscheibe ausgebildet ist, zumindest ein sich in Radialrichtung erstreckendes elastisches Element angeordnet ist, an dessen radial äußeren Bereich zumindest ein Anbindungsabschnitt angeordnet ist, wobei das elastische Element vom Entkopplungselement umgriffen wird und wobei das elastische Element in einem Kopplungsabschnitt mit dem Innenbereich des Rotors verbunden, insbesondere einstückig angebunden ist.

Im Rahmen der vorliegenden Erfindung kann unter der Stirnfläche des Rotors diejenige Oberfläche des Rotors verstanden werden, welche den Rotor seitlich in Richtung der Drehachse begrenzt. Der Begriff Stirnfläche ist hierbei nicht auf eine ebene Oberfläche begrenzt, vielmehr kann die Stirnfläche jegliche Oberflächenkontur aufweisen. Vorzugsweise erstreckt sich die Stirnfläche jedoch im Wesentlichen in Radialrichtung und ist im Wesentlichen zumindest teilweise eben beziehungsweise plan ausgebildet.

Gemäß einer weiteren vorteilhaften Weiterbildung der Erfindung kann es überdies vorgesehen sein, dass der Rotor ganz oder zumindest teilweise aus Kunststoff ausgebildet ist. So ist es beispielsweise denkbar, dass der Rotor abschnittsweise einen metallischen Werkstoff umfasst und abschnittsweise aus einem Kunststoff ausgebildet ist. Ferner ist es auch denkbar, dass der Rotor ein Grundmaterial aufweist, in welches zumindest abschnittsweise Fasern - oder Partikel zur Optimierung der Materialeigenschaften eingebracht sind. Eine besonders bevorzugte Ausführungsform der Erfindung sieht hierbei vor, dass insbesondere das elastische Element aus einem anderen Material als ein überwiegender Teil des Rotors ausgebildet ist. Überdies sind auch andere Materialkombinationen denkbar. So ist es beispielsweise auch denkbar, dass der Rotor zumindest abschnittsweise aus vulkanisiertem Natur- und alternativ hierzu oder zusätzlich aus vulkanisiertem Synthesekautschuk ausgebildet ist. Erfindungswesentlich ist hierbei lediglich, dass der Rotor zumindest einen magnetischen Rückschlussring aufweist.

Vorzugsweise ist das elastische Element als Biegelasche, insbesondere als Federzunge ausgebildet. Auf diese Weise kann eine entsprechende Entkopplung der Magnetkreiskräfte vom Lüfterrad bereitgestellt werden.

Eine besonders gleichmäßige Kraftübertragung und optimale Dimensionierung kann insbesondere dadurch bereitgestellt werden, dass mehrere, vorzugsweise drei elastische Elemente am Umfang verteilt, insbesondere äquidistant zueinander angeordnet sind. Selbstverständlich sind jedoch auch andere Ausführungsformen denkbar.

Gemäß einer vorteilhaften Weiterbildung der Erfindung ist es ferner vorgesehen, dass jeweils in Umfangsrichtung zwischen zwei Entkopplungselementen benachbarter elastischer Elemente ein Verbindungssteg angeordnet ist, welcher sich in Radialrichtung erstreckt und den der Motorwelle zugeordneten Innenbereich des Rotors und den der Magneten zugeordneten Außenbereich des Rotors verbindet.

Zur Minimierung der Bewegungsamplitude und optimalen Kraftleitung an das Lüfterrad ist es gemäß einer weiteren vorteilhaften Weiterbildung der Erfindung vorgesehen, dass im Bereich des Kopplungsabschnittes und alternativ oder zusätzlich hierzu auch im Bereich des Verbindungsstegs Versteifungselemente angeordnet sind. Eine besonders einfache und kostengünstige Versteifung lässt sich dabei insbesondere dadurch bereitstellen, dass das Versteifungselement einteilig am Rotor ausgebildet ist und beispielsweise als Materialkrümmung, Sicke oder Rippe ausgebildet ist.

Eine vorteilhafte Weiterbildung der Erfindung sieht ferner vor, dass der Rotor zumindest abschnittsweise als Stanzbiegeteil aus einem Blech gefertigt wird. Gemäß einer besonders bevorzugten Weiterbildung der Erfindung ist der Rotor hierbei zumindest abschnittsweise aus zumindest zwei in Axialrichtung übereinander angeordneten Blechlagen ausgebildet. Vorzugsweise können die Lagen in einem Bearbeitungsprozess in demselben Stanzbiegewerkzeug gefertigt werden. Selbstverständlich ist es auch denkbar, die Lagen in Abhängigkeit der gewählten Materialzusammensetzung separat voneinander mit einem entsprechenden auf die Materialkombination abgestimmten Fertigungsverfahren herzustellen. Es ist auch denkbar, dass die Lagen des Rotors zumindest teilweise aus voneinander abweichenden Materialien ausgebildet sind. Eine vorteilhafte Weiterbildung der Erfindung sieht vor, dass die Lagen jeweils als einteiliges Bauteil ausgebildet sind. Es ist jedoch auch denkbar, dass die Lagen als jeweils als mehrteilige Bauteile ausgebildet sind.

In den Zeichnungen sind Ausführungsbeispiele des Lüftersystems beziehungsweise des Rotors dargestellt und in der nachfolgenden Beschreibung näher erläutert. Es zeigen:
- Figur 1: eine Schnittdarstellung eines erfindungsgemäßen Lüftersystems,
- Figur 2: eine erste Ausführungsform eines Rotors in einer Draufsicht,
- Figur 3: eine zweite Ausführungsform eines Rotors in einer perspektivischen Darstellung,
- Figur 4: eine dritte Ausführungsform eines Rotors in einer perspektivischen Darstellung und
- Figur 5: eine vierte Ausführungsform eines Rotors in einer perspektivischen Darstellung.

In den verschiedenen Ausführungsvarianten erhalten gleiche Teile die gleichen Bezugszahlen.

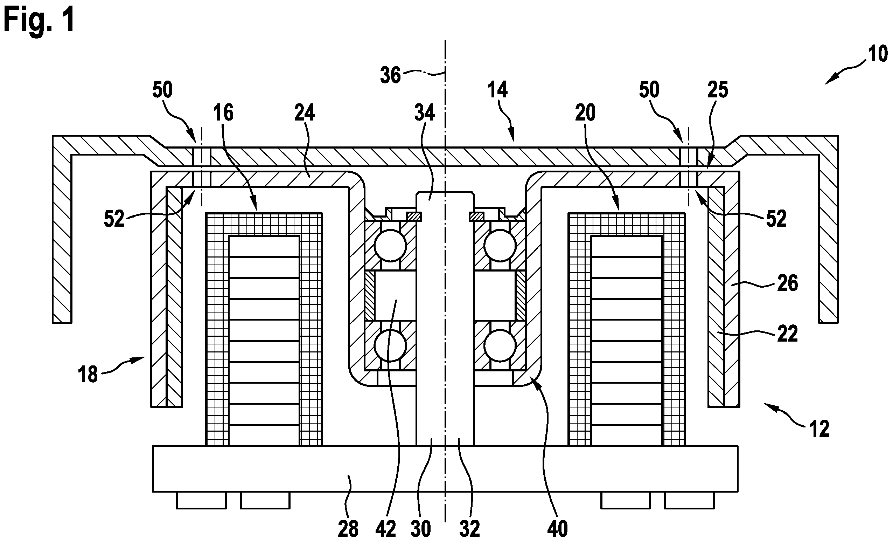

Figur 1 zeigt ein Lüftersystem 10 mit einem Elektromotor 12 und einem Lüfterrad 14. Das Lüfterrad 14 weist eine Vielzahl an Lüfterschaufeln auf, welche dafür ausgelegt sind bei Rotation des Lüfterrades 14 Kühlluft zu fördern. Der in Figur 1 gezeigte, beispielshaft als Außenläufer ausgebildete, Elektromotor 12 des Lüftersystems 10 weist ein feststehendes Teil, den Stator 16 und ein umlaufendes Teil, den Rotor 18 auf.

Ein Elektromotor vom Typ eines Außenläufermotors, wie er in Figur 1 dargestellt ist, zeichnet sich dadurch aus, dass der radial innen liegende Teil im Betrieb fest steht, während der radial außen liegende Teil rotiert. Am Stator 16 ist eine Mehrzahl an Wicklungen 20 angeordnet. Der Rotor 18 wiederum weist Magnete 22 auf. Werden die Wicklungen 20 von Strom durchflossen, so treibt das magnetische Feld des Stators 16 den Rotor 18 an.

Es wird darauf hingewiesen, dass das Lüftersystem 10, insbesondere der Elektromotor 12 in Figur 1 nur schematisch dargestellt ist, da Aufbau und Funktionalität eines geeigneten Elektromotors 12 hinreichend aus dem Stand der Technik bekannt sind, sodass hier zwecks Knappheit und Einfachheit der Beschreibung auf eine eingehende Beschreibung des Lüftersystems 10 verzichtet wird.

Wie in Figur 1 deutlich zu erkennen ist, ist der Rotor 18 im Wesentlichen topfförmig ausgebildet. Innerhalb der topfförmige Ausführung des Rotors 18 sind hierbei die Wicklungen 20 und Magnete 22 angeordnet. Der topfförmige Rotor 18 weist eine sich im Wesentlichen in radialer Richtung erstreckende Stirnfläche 24 auf. Die Stirnfläche 24 ist im Wesentlichen zumindest teilweise eben ausgebildet und bildet den Boden des topfförmigen Rotors 18. Neben der sich in radialer Richtung erstreckenden Stirnfläche 24, weist der Rotor 18 einen umlaufenden Kragen 26 auf, welcher am radial äußeren Rand des radial äußeren Bereiches 25 des Rotors 18 angeordnet ist und eine umlaufende zylindrische Seitenwand des Rotors 18 bildet. Der umlaufende Kragen 26 erstreckt sich hierbei im Wesentlichen zumindest teilweise in Axialrichtung.

Der der Stirnfläche 24 des topfförmigen Rotors 18 gegenüberliegende, offene Bereich des Rotors 18 wird, wie in Figur 1 deutlich zu erkennen ist, durch einen Motorträger 28 abgeschirmt. Durch die Anordnung des topfförmigen Rotors 18 sowie des als Deckel fungierenden Motorträgers 28 ergibt sich ein im Wesentlichen abgeschlossener Raum für die Magnete 20 und Wicklungen 20.

Bei der in Figur 1 dargestellten Ausführungsform ist die Motorwelle 30 drehfest mit dem Motorträger 28 beziehungsweise mit dem Stator 16 verbunden. Eine solche drehfeste Verbindung kann insbesondere durch Einspritzen der Motorwelle 30 in den Motorträger 28 bereitgestellt werden. An der der Motorwelle 30 zugewendeten Innenseite des sich in Axialrichtung erstreckenden umlaufenden Kragens 26 sind die Magnete 22 angeordnet. Wie in Figur 1 dargestellt ist, weist die Motorwelle 30 ein fest eingespanntes Ende 32, ein freies Ende 34 und eine Drehachse 36 auf, um welche der Rotor 18 mit dem Lüfterrad 14 und der Stator 16 zueinander drehbar gelagert sind.

Wie in Figur 1 dargestellt ist, verläuft die Drehachse 36 im Sinne einer sich ins Unendliche erstreckenden, gedachten Gerade insbesondere mittig durch die Motorwelle 30 und entspricht der Mittelachse der Motorwelle 30. Zur drehbaren Lagerung des Rotors 18 gegenüber dem Stator 16 um die Drehachse 36 ist am Rotor 18 an seiner der Motorwelle 30 zugewandten Seite ein zylindrischer, sich im Wesentlichen in Axialrichtung erstreckender Lagersitz 40 angeordnet. Im Inneren des Lagersitzes 40 des Rotors 18 ist eine Lagerung 42 angeordnet. Gemäß der in Figur 1 dargestellten Ausführungsform der Erfindung weist die Lagerung zwei Lager auf, welche mit ihrem jeweiligen Außenring im Lagersitz 40 des Rotors und mit ihrem entsprechenden Innenring drehfest auf der Motorwelle 30 sitzen. Selbstverständlich sind auch andere Lageranordnungen und Lagerausführungen denkbar.

Läuft der Elektromotor 12 an, so wird der Rotor 18 in Rotation versetzt. Um das Lüfterrad 14 mitzunehmen, ist dieses drehfest auf der Stirnseite 24 des Rotor 18 befestigt. Wie in Figur 1 schematisch angedeutet ist, ist zu diesem Zweck das Lüfterrad 14 über zumindest ein Anbindungselement 50 in einem Anbindungsabschnitt 52 des Rotors 18 drehfest angeordnet. Gemäß der in Figur 1 dargestellten Ausführungsform der Erfindung ist das Anbindungselement 50 als Schraubenverbindung ausgebildet. Es sind jedoch auch andere Anbindungsformen denkbar. Der Anbindungsabschnitt 52 des Rotors 18 an welchem das entsprechende Anbindungselement 50 angeordnet ist befindet sich an der Stirnseite 24 des Rotors 18, wobei der Anbindungsabschnitt 52 vorzugsweise in einem radial äußeren Bereich 25 der Stirnseite 24 angeordnet ist und somit vorzugsweise im Bereich der Magnete 22 angeordnet ist.

Wechselkräfte aus dem Magnetkreis des Elektromotors 12 des Lüftersystems 10 können im Rotor 18 zu entsprechenden ungewünschten Strukturverformungen führen, welche insbesondere im Zusammenspiel mit Strukturresonanzen auftreten können. Bei bekannten Systemen werden diese ungewünschten Bewegungsamplituden auf das über das Anbindungselement 50 drehfest angebrachte Lüfterrad 14 übertragen. Diese Bewegungsamplituden des Lüfterrades 14, welches eine entsprechend größere Oberfläche als der Rotor 18 selbst aufweist, führen dann zu einer Übertragung von Schwingungen an die Luft und damit einhergehend zu einer ungewünschten Geräuschentwicklung. Insbesondere im radial äußeren Bereich 25, das heißt im Bereich der Magnete treten die größten Bewegungsamplituden des Rotors 18 auf. Da es jedoch aus konstruktiven Gründen wünschenswert ist, dass gerade in diesem radial äußeren Bereich 25, welcher maximal angeregt wird, die Anbindung des Lüfterrades 18 angeordnet ist, ist ein entsprechendes Entkopplungselement 60 vorgesehen. Aufgrund der Ansicht in Figur 1 ist das entsprechende Entkopplungselement 60 hier nicht dargestellt. Entsprechende Ausführungsformen der Erfindung sind daher in den folgenden Figuren näher erläutert und dargestellt.

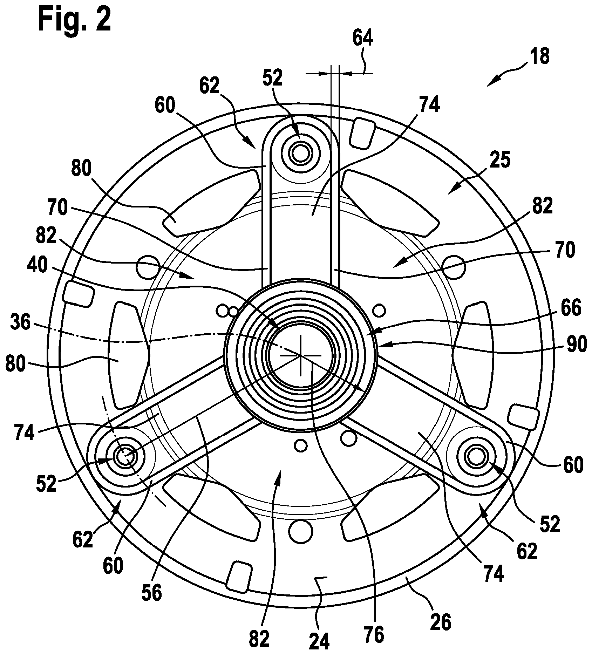

Figur 2 zeigt eine erste Ausführungsform der Erfindung. In Figur 2 ist dabei eine Draufsicht auf die Stirnseite 24 des Rotors 18 dargestellt. Wie in Figur 2 deutlich zu erkennen ist, ist der Rotor im Wesentlichen kreisförmig ausgebildet und weist eine sich im Wesentlichen in Radialrichtung erstreckende Stirnfläche 24 auf. Die Stirnfläche 24 ist im Wesentlichen zumindest teilweise eben ausgebildet. Am radial äußeren Rand der Stirnfläche 24 ist der sich im Wesentlichen in Axialrichtung erstreckende umlaufende Kragen 26 angeordnet, an dessen Innenwand die Magnete 22 (hier nicht sichtbar) angeordnet sind. In seinem zentralen Mittenbereich weist der Rotor 18 einen Lagersitz 40 auf. Im montierten Zustand ist dabei im Inneren des Lagersitzes 40 des Rotors 18 die Lagerung 42 zur drehbaren Lagerung des Rotors 18 um den Stator 16 beziehungsweise die Motorwelle 30 angeordnet.

Gemäß der In Figur 2 dargestellten Ausführungsform der Erfindung sind an der Stirnseite 24 des Rotors 18 drei Anbindungsabschnitte 52 angeordnet, welche gemäß der hier dargestellten Ausführungsform der Erfindung als Bohrungen zur Aufnahme der als Schrauben ausgebildeten Anbindungselemente 50 ausgebildet sind. Wie bereits erwähnt, sind auch andere Anbindungsformen beziehungsweise Befestigungsmittel denkbar. Über die Anbindungselemente 50 wird das Lüfterrad 14 auf der Stirnfläche 24 des Rotors 18 drehfest befestigt und das Drehmoment des Rotors auf das Lüfterrad 14 übertragen.

Gemäß der in Figur 2 dargestellten Ausführungsform der Erfindung sind die drei Anbindungsabschnitte 52 im Wesentlichen äquidistant zueinander angeordnet und befinden sich im Wesentlichen auf demselben Teilkreisradius 56 um die gedachte Drehachse 36. Selbstverständlich kann die Anzahl der Anbindungsabschnitte 52 sowie ihre Anordnung sowohl zueinander als auch auf dem Rotor 18 variieren.

Wie bereits erwähnt, treten insbesondere im radial äußeren Bereich 25, das heißt im Bereich der Anbindungsabschnitte 52 die größten Bewegungsamplituden des Rotors 18 auf. Um zu verhindern, dass diese Bewegungen des Rotors ungehindert an das Lüfterrad 14 übertragen werden, weist der Rotor zumindest ein entsprechendes Entkopplungselement 60 auf.

Gemäß der in Figur 2 dargestellten Ausführungsform der Erfindung sind entsprechend der Anzahl der Anbindungsabschnitte drei Entkopplungselemente 60 vorgesehen, wobei jedes Entkopplungselement 60 den entsprechenden Anbindungsabschnitt 52 in seinem jeweiligen radial äußeren Bereich im Wesentlichen durchgehend umgreift. Erfindungsgemäß sind die Entkopplungselemente 60 dazu vorgesehen, die jeweiligen Anbindungsabschnitte 52 von dem den entsprechenden Anbindungsabschnitt 52 umgebenden Rotorabschnitt 62 mechanisch zu entkoppeln. Durch diese mechanische Entkopplung wird der Weg des Kraftflusses von den Magneten 22 über den Rotor 18 zum Lüfterrad 14 verlängert, was mit einer vorteilhaften Reduktion der Bewegungsamplitude der Anbindungsabschnitte 52 und in Folge dessen zu einer reduzierten Geräuschbildung führt.

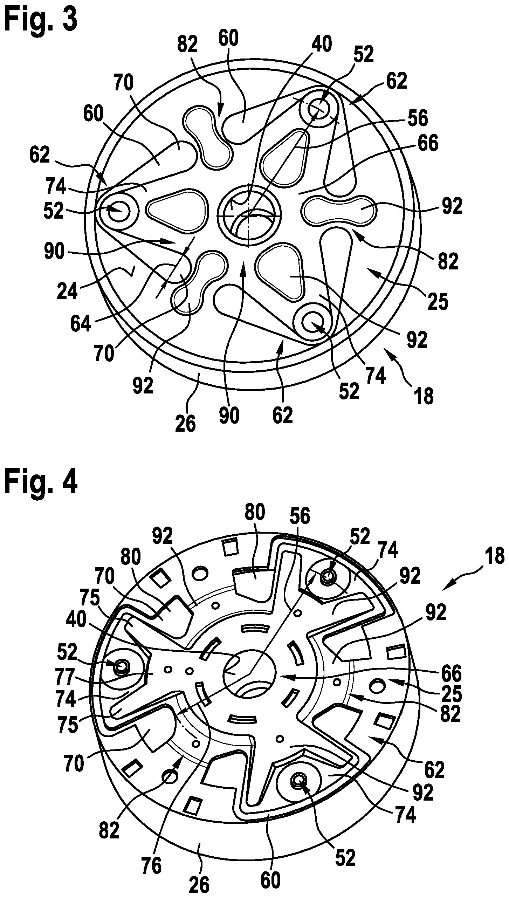

Gemäß der in Figur 2 dargestellten Ausführungsform der Erfindung sind die Entkopplungselemente 60 als Durchgangsöffnungen beziehungsweise als Entkopplungsspalte ausgebildet. Gemäß der hier dargestellten Ausführungsform der Erfindung ist dabei die Spaltbreite 64 des Entkopplungselementes 60 über die gesamte Längserstreckung des Entkopplungselementes 60 im Wesentlichen konstant. Es sind jedoch auch andere Spaltbreitenverläufe denkbar, wie dies insbesondere in den Figuren 3 und 4 näher dargestellt ist.

Zur Optimierung des Weges des Kraftflusses beziehungsweise der Leitstützstruktur erstreckt sich das Entkopplungselement von dem radial äußeren Bereich 25 bis zu einem Innenbereich 66, das heißt bis zu einem Bereich in welchem der Lagersitz 40 für die Motorwelle 30 angeordnet ist.

Gemäß der in Figur 2 dargestellten Ausführungsform der Erfindung ist der Entkopplungsspalt im Wesentlichen u-förmig ausgebildet, wobei das Bogensegment des im Wesentlichen u-förmigen Entkopplungsspaltes 60 den jeweiligen Anbindungsabschnitt umgreift beziehungsweise umschließt und wobei die Öffnung des Entkopplungsspaltes dem Innenbereich zugewandt ist.

Gemäß der in Figur 2 dargestellten Ausführungsform der Erfindung erstrecken sich die jeweiligen freien Enden 70 des im Wesentlichen u-förmigen Entkopplungselementes 60 im Wesentlichen in Radialrichtung. Das Entkopplungselement 60 beziehungsweise der Entkopplungsspalt schließt somit ein sich im Wesentlichen in Radialrichtung erstreckendes elastisches Element 74 ein, welches mit dem Innenbereich 66 des Rotors verbunden ist.

Gemäß der in Figur 2 dargestellten Ausführungsform der Erfindung ist das elastische Element 74 als Biegelasche beziehungsweise Biegezunge ausgebildet und weist an seinem radial äußeren Abschnitt den jeweiligen Anbindungsabschnitt 52 für das Lüfterrad 14 auf. Entsprechend der u-förmigen Ausgestaltung des Entkopplungselementes 60 weist die Biegelasche einen abgerundeten radial äußeren Bereich auf. Erfindungsgemäß enden die jeweiligen freien Enden des Entkopplungselementes 60 auf einem Teilkreisradius 76, welcher kleiner ist als der Teilkreisradius 56 des zugeordneten Anbindungsabschnittes 52.

Entsprechend der Anzahl der Anbindungsabschnitte 52 sind gemäß der in Figur 2 dargestellten Ausführungsform der Erfindung drei elastische Elemente 74 vorgesehen, wobei der jeweilige Anbindungsabschnitt 52 an den entsprechenden radial äußeren Bereichen der elastischen Elemente 74 angeordnet ist. Durch diese elastischen Elemente 74 mit den entsprechenden die elastischen Elemente 74 umgebenden Entkopplungselementen 60 wird die unmittelbare Leitstützstruktur zwischen dem Anbindungsabschnitt 52 und dem den Anbindungsabschnitt umgebenden Rotorabschnitt 62 unterbrochen, sodass der Weg des Kraftflusses um die radiale Länge des elastischen Elementes 74 entsprechend verlängert wird und somit Geräusche wie eingangs beschrieben entsprechend reduziert werden können. Zur symmetrischen Krafteinleitung kann es dabei von Vorteil sein, wenn die Anbindungsabschnitte 52 und damit einhergehend auch die elastischen Elemente 74 äquidistant am Umfang verteilt angeordnet sind. Der in Figur 2 dargestellte Rotor kann, gemäß einer vorteilhaften Weiterbildung der Erfindung als Stanzbiegeteil ausgebildet sein.

Neben den als Durchgangsöffnung ausgebildeten Entkopplungselementen 60 weist der Rotor 18 gemäß der in Figur 2 dargestellten Ausführungsform der Erfindung weitere Durchgangsöffnungen 80 auf, welche beispielsweise als Belüftungsöffnungen für den Elektromotor 12 ausgebildet sein können.

Zwischen den am Umfang verteilt angeordneten elastischen Elementen 74 weist der Rotor 18 jeweils Verbindungsstege 82 auf, welche sich im Wesentlichen in Radialrichtung erstrecken und dem der Motorwelle 30 zugeordneten Innenbereich 66 des Rotors 18 und den der Magnete 22 zugeordneten Außenbereich 25 des Rotors miteinander verbinden. Diese Verbindungsstege 82 bilden somit einen entsprechenden Teil der Leitstützstruktur zur Kraftübertragung zwischen den Magneten 22 und dem Lüfterrad 14.

Figur 3 zeigt eine weitere Ausführungsform des Rotors 18 in einer perspektivischen Darstellung. Der Rotor 18 entspricht dabei im Wesentlichen dem Rotor gemäß der in Figur 2 dargestellten Ausführungsform mit dem Unterschied, dass die Entkopplungselemente 60 im Wesentlichen v-förmig ausgebildet sind. Die Öffnung der v-förmigen Entkopplungselemente 60 sind dabei entsprechend dem Innenbereich 66 zugewandt ausgebildet. Wie in Figur 3 deutlich zu erkennen ist, nimmt ferner die Spaltbreite 64 mit zunehmendem Abstand vom entsprechenden Anbindungsabschnitt 52 zu, sodass die jeweiligen freien Enden 70 einen verbreiterten Spalt aufweisen.

Entsprechend der Form der Entkopplungselemente 60 weisen die elastischen Elemente 74 eine im Wesentlichen in Richtung des radial äußeren Bereiches 25 spitz zulaufende Kontur auf, sodass der Kopplungsbereich 90 zwischen dem elastischen Element 74 und dem Innenbereich 66 in vorteilhafter Weise verbreitert ist. Im Unterschied zu der in Figur 2 dargestellten Ausführungsform des Rotors 18 weist der in Figur 3 dargestellte Rotor 18 ferner sowohl im Bereich des Kopplungsbereiches 90 als auch im Bereich der Verbindungsstege 82 Versteifungselemente 92 auf, welche in vorteilhafter Weiterbildung die Leitstützstruktur zur Kraftübertragung unterstützen.

Gemäß der in Figur 3 dargestellten Ausführungsform der Erfindung sind die Versteifungselemente 92 als Versteifungsrippen einteilig mit dem Rotor 18 ausgebildet. Die Versteifungselemente 92 sind in vorteilhafter Weise belastungsoptimiert konturiert. Es gibt Versteifungselemente 92 die eine im Wesentlichen dreieckige Form aufweisen. Sie sind auf zumindest einem elastischen Element 74 angeordnet. Weitere Versteifungselemente 92 weisen die Form eines durchgeschnittenen Knochens auf und sind im Bereich der Verbindungsstege angeordnet.

Figur 4 zeigt eine weitere Ausführungsform der Erfindung gemäß welcher die Belüftungsöffnungen 80 des Elektromotors 12 als Teil des Entkopplungselementes 60 ausgebildet sind. Gemäß der in Figur 4 dargestellten Ausführungsform bilden hierbei die Belüftungsöffnungen 80 die jeweils freien Enden 70 des Entkopplungselementes 60. Die freien Enden sind in Umfangsrichtung zwischen den elastischen Elementen 74 und den Verbindungsstegen 82 angeordnet. Durch die Integration der Funktionen kann die zusätzlich für das Entkopplungselement 60 anfallende Schnittlänge in vorteilhafter Weise reduziert werden und die Bauteilsteifigkeit bei gleicher Funktionalität optimiert werden.

Auch bei einer solchen Ausführungsform ist der Teilkreisradius 76 der jeweils freien Enden 70 des Entkopplungselementes 60 kleiner als der Teilkreisradius 56 der Anbindungsabschnitte 52, sodass diese immer radial außerhalb der freien Enden 70 angeordnet sind.

Das elastische Element, insbesondere die Biegelaschen 74 beziehungsweise Federzungen weisen gemäß der in Figur 4 dargestellten Ausführungsform im Wesentlichen mit zunehmendem Radius eine zunehmende Breite, insbesondere eine im Wesentlichen trapezförmige Kontur auf, wobei die Anbindungsabschnitte 52 beziehungsweise Bohrungen jeweils mittig am äußeren Umfang angeordnet sind.

Der dem umlaufenden Kragen 26 zugerichtet Bereich des elastischen Elements 74 weist eine Kontur auf, welche einen um die Erstreckung des Entkopplungsbereichs 60 in Radialrichtung verringerten Radius aufweist. Es ergibt sich ein gleichmäßiger Abstand entlang der Radialachse zwischen der Biegelasche 74 und dem umlaufenden Kragen 26. In diesem Bereich ist ein Teil des Entkopplungselement 60 ausgebildet.

Gemäß der in Figur 4 dargestellten Ausführungsform der Erfindung sind sowohl der Kopplungsbereich als auch das elastische Element 74 um den Anbindungsabschnitt 52 herum mittels eines Versteifungselementes 92 versteift ausgebildet. Das Versteifungselement 92 ist dabei als eine im Wesentlichen y-förmige Sicke ausgebildet. Das Versteifungselement 92 weist zwei Schenkel 75 auf, welche sich v-förmig zueinander erstrecken. Insbesondere liegt der Anbindungsabschnitt 52 im Wesentlichen in Umfangsrichtung zwischen den Schenkeln 75. Insbesondere weist das Versteifungselement 92 eines jeden elastischen Elements 74 eine hasenkopfartige Form auf. Hierbei werden die Ohren durch die Schenkel 75 gebildet. Die freien Enden der Schenkel 75 zeigen weg von dem Innenbereich 66. Die Schenkel 75 sind über ein Verbindungsmittel 77 in Umfangsrichtung miteinander verbunden. Das Verbindungsmittel ist in Umfangsrichtung zwischen den Schenkeln 75 eines elastischen Elements 74 ausgebildet. Das Verbindungsmittel 77 ist Teil des Versteifungsmittels 92. Das Verbindungsmittel 77 bildet den Kopf der hasenkopfartigen Form.

Die Versteifungselemente 92 gehen in den Innenbereich 66 über. Vorzugsweise sind drei elastische Elemente 74 mit jeweils einem Versteifungselement 92 ausgebildet.

Die Dicke des Versteifungselements 92 nimmt mit zunehmender Entfernung vom Lagersitz 40 ab.

Der Innerbereich 66 weist ebenfalls einen Versteifungsbereich auf, dessen äußerer Radius kleiner als der Radius 76 ist. Das Versteifungselement 92 geht in den Versteifungsbereich des Innenbereichs 66 über.

Auch die zwischen den Entkopplungselementen 60 angeordneten Verbindungsstege 82 sind optional durch ein entsprechendes Versteifungselement 92 versteift. Das Versteifungselement 92 ist hierbei insbesondere als eine sich in Umfangsrichtung erstreckende Rippe beziehungsweise Sicke ausgebildet.

Das Entkopplungselement 60 umgreift das elastische Element 74 in einem radial äußeren Bereich 25 vollständig, sodass die Federzunge beziehungsweise das elastische Element 74 an seinem radial äußeren Bereich von dem das elastische Element 74 umgebenden Rotorabschnitt 26 mechanisch entkoppelt. Die Federzunge beziehungsweise Biegelasche 74 kann sich an ihrem freien Ende in Axialrichtung unabhängig von der Stirnfläche 24 des Rotors 18 bewegen.

Figuren 3 und 4 zeigen jeweils Ausführungsformen der Erfindung gemäß derer das Entkopplungselement 60 bezüglich der Radialrichtung weiter außen endet, als das Entkopplungselement 60 gemäß der in Figur 2 dargestellten Ausführungsform. Der Innenbereich 66 gemäß der Ausführungsformen aus den Figuren 3 und 4 endet somit in Radialrichtung deutlich weiter außen als der Innenbereich gemäß Figur 2. Der Radius des Innenbereichs 66 gemäß der in den Figuren 3 und 4 dargestellten Ausführungsform ist demnach im Wesentlichen halb so groß wie der Radius der gesamten Stirnfläche 24 des Rotors 18.

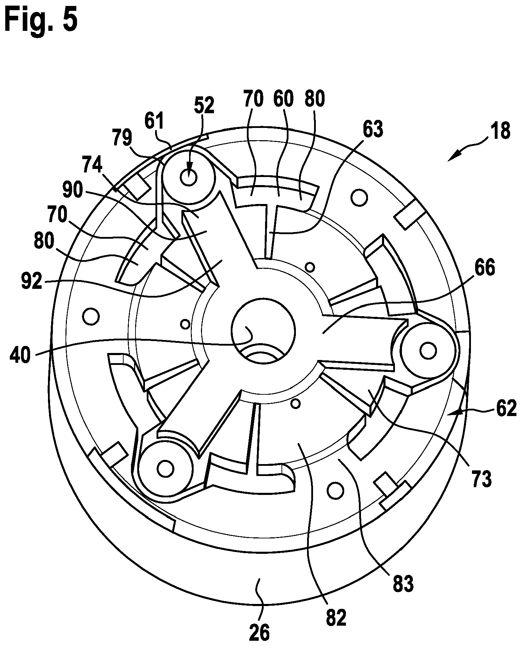

Figur 5 zeigt eine weitere Ausführungsform des Rotors 18 in einer perspektivischen Darstellung. Der Rotor 18 entspricht dabei im Wesentlichen dem Rotor gemäß der in Figur 2 dargestellten Ausführungsform mit dem Unterschied, dass die Entkopplungselemente 60 im Bereich 61 der Anbindungsabschnitte 52 sehr dünn, insbesondere am dünnsten, ausgebildet ist und dass das Entkopplungselement 60 vom Bereich 61 ausgehend in zwei verbreiterte Bereiche 70 übergeht. Die verbreiterten Bereiche 70 bilden Belüftungsöffnungen 80. Die Belüftungsöffnungen 80 bilden jeweils ein freies Ende 70 des Entkopplungselementes 60.

Die Belüftungselemente 80 sind im Wesentlichen trapezförmig ausgebildet. Der Bereich 61 des Entkopplungselements 60 ist im Wesentlichen halbkreisförmig ausgebildet. An seinen offenen Enden geht es jeweils in die Bereiche 70, bzw. die Belüftungsöffnungen über.

Weiterhin weist das Entkopplungselement 60 jeweils im Bereich 70 zumindest einen zusätzlichen Spalt 63, der sich in Richtung Innenbereich 66 erstreckt auf.

Der Spalt 63 trennt in Umfangsrichtung die elastischen Elemente 74 von den Verbindungsstegen 82.

Entsprechend der Form der Entkopplungselemente 60 weisen die elastischen Elemente 74 einen im Wesentlichen trapezförmigen Bereich 73 auf. Die elastischen Elemente 74 nehmen in Richtung des äußeren Bereichs zu. Im Anschluss an den trapezförmigen Bereich 73 ist das elastische Element halbkreisförmig ausgebildet. Das elastische Element 74 weist in Richtung des radial umlaufenden Kragens 26 einen halbkreisförmigen Bereich 79, insbesondere eine halbkreisförmige Kontur, auf. Der halbkreisförmige Bereich 79 schließt sich insbesondere an ein kleineres weiteres Trapez an, welches zwischen dem trapezförmigen Bereich 73 und dem halbkreisförmigen Bereich 79 ausgebildet ist.

Im Kopplungsbereich 90 zwischen dem elastischen Element 74 und dem Innenbereich 66 sind Versteifungselemente 92 ausgebildet, welche in vorteilhafter Weiterbildung die Leitstützstruktur zur Kraftübertragung unterstützen. Diese erstrecken sich in radialer Richtung über den trapezförmigen Bereich 73.

Gemäß einer Weiterbildung der Erfindung erstrecken sich die Versteifungselemente 92 bis zum Anbindungsabschnitt 52.

Gemäß der in Figur 3 dargestellten Ausführungsform der Erfindung sind die Versteifungselemente 92 als Versteifungsrippen einteilig mit dem Rotor 18 ausgebildet. Die Versteifungselemente 92 sind in vorteilhafter Weise belastungsoptimiert konturiert.

Die in Umfangsrichtung zwischen den Entkopplungselementen 60, insbesondere den Spalten 63 angeordneten Verbindungsstege 82 weisen einen trapezförmigen Bereich auf. Dieser geht in Richtung des äußeren Bereichs in einen schmäleren Bereich 83 über, der wiederum in den umgebenden Rotorabschnitt 62 übergeht.

## Patentansprüche

1. Lüftersystem (10) mit einem Elektromotor (12), wobei der Elektromotor (12) einen Rotor (18) aufweist und der Rotor (18) gegenüber einem Stator drehbar gelagert ist, wobei an einer Stirnfläche (24) des Rotors (18) ein Lüfterrad (14) über zumindest ein Anbindungselement (50) in einem Anbindungsabschnitt (52) des Rotors (18) drehfest angeordnet ist, wobei zumindest ein Entkopplungselement (60) vorgesehen ist, welches als axial durchgängiger Entkopplungsspalt ausgebildet ist, **dadurch gekennzeichnet, dass** das Entkopplungselement (60) den zumindest einen Anbindungsabschnitt (52) in seinem jeweiligen radial äußeren Bereich (25) umgreift, wobei das Entkopplungselement (60) dazu vorgesehen ist, den Anbindungsabschnitt (52) des Rotors (18) von einem den Anbindungsabschnitt (52) umgebenden Rotorabschnitt (62) mechanisch zu entkoppeln.

2. Lüftersystem (10) nach einem der vorhergehenden Ansprüche, **dadurch gekennzeichnet, dass** sich das Entkopplungselement (60) in Radialrichtung bis zu einem Innenbereich (66), welcher im Bereich einer Motorwelle (30) angeordnet ist, erstreckt.

3. Lüftersystem (10) nach einem der vorhergehenden Ansprüche, **dadurch gekennzeichnet, dass** das Entkopplungselement (60) im Wesentlichen u- oder v-förmig ausgebildet ist.

4. Lüftersystem (10) nach einem der vorhergehenden Ansprüche, **dadurch gekennzeichnet, dass** eine Spaltbreite (64) des Entkopplungselementes (60) mit zunehmendem Abstand vom Anbindungsabschnitt (52) zunimmt.

5. Lüftersystem (10) nach einem der vorgehenden Ansprüche, **dadurch gekennzeichnet, dass** an der Stirnfläche (24) des Rotors (18), welche im Wesentlichen als Rotorscheibe ausgebildet ist, zumindest ein sich in Radialrichtung erstreckendes elastisches Element (74) angeordnet ist, an dessen radial äußeren Bereich zumindest ein Anbindungsabschnitt (52) angeordnet ist, wobei das elastische Element (74) vom Entkopplungselement (60) umgriffen wird und wobei das elastische Element (74) in einem Kopplungsabschnitt (90) mit dem Innenbereich (66) des Rotors (18) verbunden, insbesondere einstückig angebunden ist.

6. Lüftersystem (10) nach einem der vorgehenden Ansprüche, **dadurch gekennzeichnet, dass** das elastische Element (74) als Biegelasche an der Rotorscheibe, insbesondere als Federzunge ausgebildet ist.

7. Lüftersystem (10) nach einem der vorhergehenden Ansprüche, **dadurch gekennzeichnet, dass** mehrere, vorzugsweise drei elastische Elemente (74) am Umfang verteilt, insbesondere äquidistant zueinander angeordnet sind.

8. Lüftersystem (10) nach einem der vorhergehenden Ansprüche, **dadurch gekennzeichnet, dass** jeweils in Umfangsrichtung zwischen zwei Entkopplungselementen (60) benachbarter elastischer Elemente (74) ein Verbindungssteg (82) angeordnet ist, welcher sich in Radialrichtung erstreckt und den der Motorwelle (30) zugeordneten Innenbereich (66) des Rotors (18) und einen den Magneten (22) zugeordneten Außenbereich (25) des Rotors (18) verbindet.

9. Lüftersystem (10) nach einem der vorhergehenden Ansprüche, **dadurch gekennzeichnet, dass** im Bereich des Kopplungsabschnittes (90) und/oder des Verbindungsstegs (82) Versteifungselemente (92) angeordnet sind, welche vorzugweise einteilig mit dem elastischen Element (74) und/ oder dem Verbindungssteg (82) ausgebildet sind und welche besonders bevorzugter Weise als Sicken oder Rippen ausgebildet sind.

10. Lüftersystem (10) nach einem der vorhergehenden Ansprüche, **dadurch gekennzeichnet, dass** die Stirnfläche (24) des Rotors (18) als Stanzbiegeteil ausgebildet ist.

## Claims

1. Fan system (10) having an electric motor (12), wherein the electric motor (12) has a rotor (18), and the rotor (18) is mounted so as to be rotatable relative to a stator, wherein a fan impeller (14) is arranged for conjoint rotation on an end surface (24) of the rotor (18) by means of at least one attachment element (50) in an attachment portion (52) of the rotor (18), wherein at least one decoupling element (60) is provided which is in the form of an axially continuous decoupling gap, **characterized in that** the decoupling element (60) engages around the at least one attachment portion (52) in the respective radially outer region (25) thereof, wherein the decoupling element (60) is provided for mechanically decoupling the attachment portion (52) of the rotor (18) from a rotor portion (62) surrounding the attachment portion (52).

2. Fan system (10) according to any of the preceding claims, **characterized in that** the decoupling element (60) extends in the radial direction up to an inner region (66), which is arranged in the region of a motor shaft (30).

3. Fan system (10) according to either of the preceding claims, **characterized in that** the decoupling element (60) is substantially u- or v-shaped.

4. Fan system (10) according to any of the preceding claims, **characterized in that** a gap width (64) of the decoupling element (60) increases as the distance from the attachment portion (52) increases.

5. Fan system (10) according to any of the preceding claims, **characterized in that** at least one elastic element (74), which extends in the radial direction and has at least one attachment portion (52) arranged in its radially outer region, is arranged at the end surface (24) of the rotor (18), which end surface is substantially in the form of a rotor disc, wherein the decoupling element (60) engages around the elastic element (74) and wherein the elastic element (74) is connected, in particular is joined in one piece, to the inner region (66) of the rotor (18) in a coupling portion (90).

6. Fan system (10) according to any of the preceding claims, **characterized in that** the elastic element (74) is in the form of a bending tab on the rotor disc, in particular in the form of a spring tongue.

7. Fan system (10) according to any of the preceding claims, **characterized in that** several, preferably three, elastic elements (74) are arranged distributed over the circumference, in particular equidistantly in relation to each other.

8. Fan system (10) according to any of the preceding claims, **characterized in that** a connecting web (82) is arranged between in each case two decoupling elements (60) of adjacent elastic elements (74) in the circumferential direction, which connecting web extends in the radial direction and connects the inner region (66), which is associated with the motor shaft (30), of the rotor (18) and an outer region (25), which is associated with the magnets (22), of the rotor (18).

9. Fan system (10) according to any of the preceding claims, **characterized in that** reinforcement elements (92), which are preferably formed in one part with the elastic element (74) and/or the connecting web (82) and which are particularly preferably in the form of beads or ribs, are arranged in the region of the coupling portion (90) and/or the connecting web (82).

10. Fan system (10) according to any of the preceding claims, **characterized in that** the end surface (24) of the rotor (18) is in the form of a stamped and bent part.

## Revendications

1. Système de ventilateur (10) pourvu d'un moteur électrique (12), le moteur électrique (12) comportant un rotor (18) et le rotor (18) étant monté de manière à pouvoir tourner par rapport à un stator, une roue de ventilateur (14) étant agencée de manière solidaire en rotation sur une face avant (24) du rotor (18) au moyen d'au moins un élément de liaison (50) dans une section de liaison (52) du rotor (18), au moins un élément de découplage (60) étant prévu, lequel est réalisé sous la forme d'une fente de découplage axialement continue, **caractérisé en ce que** l'élément de découplage (60) entoure la ou les sections de liaison (52) dans sa zone radialement extérieure (25) respective, l'élément de découplage (60) étant prévu pour découpler mécaniquement la section de liaison (52) du rotor (18) d'une section de rotor (62) entourant la section de liaison (52).

2. Système de ventilateur (10) selon l'une quelconque des revendications précédentes, **caractérisé en ce que** l'élément de découplage (60) s'étend en direction radialet jusqu'à une zone intérieure (66) qui est agencée dans la zone d'un arbre moteur (30).

3. Système de ventilateur (10) selon l'une quelconque des revendications précédentes, **caractérisé en ce que** l'élément de découplage (60) est réalisé sensiblement en forme de U ou de V.

4. Système de ventilateur (10) selon l'une quelconque des revendications précédentes, **caractérisé en ce qu'**une largeur de fente (64) de l'élément de découplage (60) augmente lorsque la distance à la section de liaison (52) augmente.

5. Système de ventilateur (10) selon l'une quelconque des revendications précédentes, **caractérisé en ce que**, sur la face avant (24) du rotor (18), qui est réalisé sensiblement sous la forme d'un disque de rotor, est agencé au moins un élément élastique (74) s'étendant dans la direction radiale et sur la zone radialement extérieure duquel est agencée au moins une section de liaison (52), l'élément élastique (74) étant entouré par l'élément de découplage (60) et l'élément élastique (74) étant relié, en particulier d'un seul tenant dans une section de couplage (90), à la zone intérieure (66) du rotor (18).

6. Système de ventilateur (10) selon l'une quelconque des revendications précédentes, **caractérisé en ce que** l'élément élastique (74) est réalisé sous la forme d'une patte flexible sur le disque de rotor, en particulier sous la forme d'une patte formant ressort.

7. Système de ventilateur (10) selon l'une quelconque des revendications précédentes, **caractérisé en ce que** plusieurs, de préférence trois éléments élastiques (74) sont agencés de manière répartie sur la périphérie, en particulier à équidistance les uns des autres.

8. Système de ventilateur (10) selon l'une quelconque des revendications précédentes, **caractérisé en ce que**, dans la direction périphérique, entre deux éléments de découplage (60) d'éléments élastiques (74) adjacents, est respectivement agencée une barrette de liaison (82) qui s'étend dans la direction radiale et qui relie la zone intérieure (66) du rotor (18) associée à l'arbre moteur (30) et une zone extérieure (25) du rotor (18) associée aux aimants (22).

9. Système de ventilateur (10) selon l'une quelconque des revendications précédentes, **caractérisé en ce que**, dans la zone de la section de couplage (90) et/ou de l'entretoise de liaison (82), sont agencés des éléments raidisseurs (92) qui sont de préférence réalisés d'un seul tenant avec l'élément élastique (74) et/ou l'entretoise de liaison (82) et qui sont de manière particulièrement préférée réalisés sous la forme de moulures ou de nervures.

10. Système de ventilateur (10) selon l'une quelconque des revendications précédentes, **caractérisé en ce que** la face avant (24) du rotor (18) est réalisée sous la forme d'une pièce estampée et pliée.
